# EUROPEAN PATENT APPLICATION

(11) **EP 3 569 993 A1**
(43) Date of publication of application: **20.11.2019**
(21) Application number: 18172633.2
(22) Date of filing: 16.05.2018
(51) Int. Cl.: G01J 3/02

(54) **METHOD AND SCANNING DEVICE FOR DETERMINING SPECTRAL DATA**

(71) Applicant: BSH Hausgeräte GmbH, 81739 München (DE)
(72) Inventor: SAGOO, Kiran Pal, 82256 Fürstenfeldbruck (DE)

(57) **Abstract**

A handheld scanning device (110) for scanning an item (111) is described. The scanning device (110) comprises a spectral sensor (201) configured to determine spectral data (210) regarding an item (111) which is placed in front of the spectral sensor (201). Furthermore, the scanning device (110) comprises a proximity and/or distance sensor (202) configured to determine distance information (203) regarding a distance of the item (111) from the spectral sensor (201). In addition, the scanning device (110) comprises a control unit (205) which is configured to determine, based on the distance information (203), that the distance of the item (111) is at or below a pre-determined distance threshold. Furthermore, the control unit (205) is configured to, in reaction to this, automatically initiate a scanning process of the spectral sensor (201) for determining spectral data (210) regarding the item (111).

## Description

The present document relates to a mobile and/or handheld scanning device, which is configured to determine spectral data regarding a scanning item, such as a clothing item or a food item.

Housing appliances, such as a washing machine, a dishwasher or a refrigerator, may be operated in different operation modes or may comprise different compartments for storing different types of items that may be placed within the housing appliance. By way of example, the washing program which is used by a washing machine to obtain optimal washing results is typically dependent on the type of clothing items that are placed within the washing machine. In a similar manner, a refrigerator may comprise different compartments for storing food items, wherein the climatic conditions, notably the temperature, of the different compartments may be optimal for different types of food items.

The present document addresses the technical problem of enabling a user in an efficient and reliable manner to determine information regarding a plurality of different items, notably items that are to be placed within and/or processed by a household appliance, in order to allow for an optimized operation of the household appliance. The technical problem is solved by the independent claims. Preferred examples are described in the dependent claims.

According to an aspect, a handheld and/or mobile scanning device for determining spectral data regarding an item, notably a clothing or textile item and/or a food item. The scanning device may be configured to be held in the hand of a user. In particular, the scanning device may be designed such that a user may bring the scanning device into proximity of an item (and/or vice versa) to perform a scanning process for determining spectral data regarding the item. The spectral data may then be used to determine property information regarding the item, such as information regarding the physical composition of the item.

The scanning device comprises a spectral sensor which is configured to determine spectral data regarding an item which is placed in front of the spectral sensor. The spectral data may comprise and/or may depend on a reflection and/or an absorption spectrum of the item. In particular, the spectral data may be indicative of the energy of absorbed and/or reflected electromagnetic radiation as a function of wavelength. The spectral sensor may be or may comprise a near infrared sensor.

Furthermore, the scanning device comprises a proximity and/or distance sensor which is configured to determine distance information regarding the distance of the item to the spectral sensor. The proximity and/or distance sensor may e.g. comprise an ultrasonic, optical, capacitive and/or inductive proximity and/or distance sensor. The proximity and/or distance sensor may be positioned directly adjacent to the spectral sensor. On the other hand, the proximity and/or distance sensor and the spectral sensor may be separate and/or different from one another.

The scanning device may comprise a housing, wherein the housing forms a handle and a measuring head. The spectral sensor and the proximity and/or distance sensor may be positioned in or at the measuring head. The housing may have a form similar to a pistol or a handheld barcode scanner.

In addition, the scanning device comprises a control unit (e.g. a microprocessor). The control unit is configured to determine, based on the distance information, that the distance of the item is at or below a pre-determined distance threshold (e.g. 10cm, 5cm or less). The distance information may be determined repeatedly, notably periodically (e.g. at a frequency of 1Hz or more). As a result of this, it may be determined almost instantly whether an item is placed in front of the spectral sensor or not.

Furthermore, the control unit may be configured to automatically initiate a scanning process of the spectral sensor for determining spectral data regarding the item, if it is determined that the distance of the item is at or below the pre-determined distance threshold. In particular, the scanning process may be initiated without the need for any further input of a user of the scanning device.

Hence, the scanning device enables a user to automatically determine spectral data regarding an item simply by placing the item sufficiently close to the scanning device. This allows a comfortable and efficient use of a scanning device in conjunction with a household appliance, such as a washing machine or a refrigerator.

The scanning device may comprise a user interface which allows a user to indicate that a series of different items is to be scanned. The user interface may comprise a button on the housing (notably on the handle) of the scanning device. Alternatively or in addition, the user interface for indicating the intention to scan a series of different items may comprise a menu point within a graphical user interface of the scanning device.

The control unit may be configured to verify whether the user has indicated via the user interface that a series of different items is to be scanned. Furthermore, the control unit may be configured to automatically initiate the scanning process for the series of different items in dependence of the distance information, (possibly only) if the user has indicated via the user interface that a series of different items is to be scanned.

In other words, the scanning device may provide a user interface (such as a repeat button), which allows a user to enable or to disable the automatic initiation of scanning processes (solely) based on the distance information. By doing this, the comfort and the reliability of using the scanning device may be increased further. In particular, unintended initiations of scanning processes may be avoided.

The scanning device may comprise a user interface which enables a user to select an item type from a list of different items types. Example item types are one or more types of clothing items (e.g. shirts, trousers, bed sheets, jackets, etc.) and/or one or more types of food items (processed food, vegetable, etc.).

The spectral sensor may be configured to determine the spectral data in dependence of the selected item type. In particular, the spectral sensor may be configured to select a spectral range of a measurement signal for determining the spectral data based on the selected item type. The spectral sensor may be configured to emit a measurement signal. Furthermore, the spectral sensor may be configured to sense a reflected signal which is indicative of the fraction of the measurement signal that has been reflected by the item.

The spectral data may then be determined based on the reflected signal (and based on the measurement signal). By adapting the measurement scheme and notably the measurement signal of the spectral sensor based on the selected item type, the relevance of the spectral data for determining a property (e.g. a composition) of an item can be improved.

The control unit may be configured to automatically reuse a selected item type for scanning a series of different items (notably if the user has indicated via the user interface, e.g. via the actuation of a repeat button, that a series of different items is to be scanned). By doing this, the comfort and the efficiency of use of a scanning device may be increased further.

The control unit may be configured to determine the distance threshold based on one or more previous scanning processes. In particular, the control unit may be configured to determine one or more distance values for a scanning distance that a user has used for one or more manually initiated previous scanning processes. The distance threshold may then be determined based on the one or more distance values. By doing this, the comfort, efficiency and reliably of using a handheld scanning device may be increased further.

The proximity and/or distance sensor may comprise a sensor which is triggered by an item touching the sensor, such that the distance information indicates whether the proximity and/or distance sensor touches the item or not. By way of example, the proximity and/or distance sensor may comprise a physical and/or mechanical button which may be actuated by an item touching the physical and/or mechanical button.

The control unit may be configured to automatically initiate the scanning process for determining spectral data regarding the item, if it is determined based on the distance information that the proximity and/or distance sensor touches the item. By making use of a proximity and/or distance sensor which is triggered by an item touching the proximity and/or distance sensor, a reliable automatic initiation of a scanning process may be achieved without the need of a repeat button, thereby further increasing the comfort and the efficiency of using a handheld scanning device.

As indicated above, the control unit may be configured to determine property information regarding a property (notably a composition) of the item based on the spectral data. Alternatively or in addition, the control unit may be configured to control a household appliance (e.g. a washing machine and/or a refrigerator) for operation in conjunction with the item, based on the spectral data (and/or based on the determined property information). In particular, a washing program of a washing machine may be automatically selected based on the spectral data. In another example, an appropriate compartment of a refrigerator for storing an item may be automatically proposed to a user based on the spectral data. The property information regarding a scanned item and/or the information regarding the operation of the household appliance in conjunction with the scanned item may be output (e.g. displayed) using a user interface of the scanning device. Hence, the scanning device may be configured to improve the use of a household appliance.

According to a further aspect, a method for determining spectral data regarding an item using a scanning device is described. The scanning device comprises a spectral sensor which is configured to determine spectral data regarding an item that is placed in front of the spectral sensor. Furthermore, the scanning device comprises a proximity and/or distance sensor which is configured to determine distance information regarding the distance of the item to the spectral sensor.

The method comprises determining distance information using the proximity and/or distance sensor. Furthermore, the method comprises determining, based on the distance information, that the distance of the item is at or below a pre-determined distance threshold. In addition, the method comprises, in reaction to determining that the distance of the item is at or below a pre-determined distance threshold, automatically initiating a scanning process of the spectral sensor for determining spectral data regarding the item.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
- Figure 1: shows an example system for determining property information regarding items that are to be placed within a household appliance;
- Figure 2a: shows an example spectral scanning device used for scanning a clothing item;
- Figure 2b: shows an example spectral scanning device comprising a proximity and/or distance sensor;
- Figure 2c: illustrates example spectral data; and
- Figure 3: shows a flow chart of an example method for determining spectral data regarding an item.

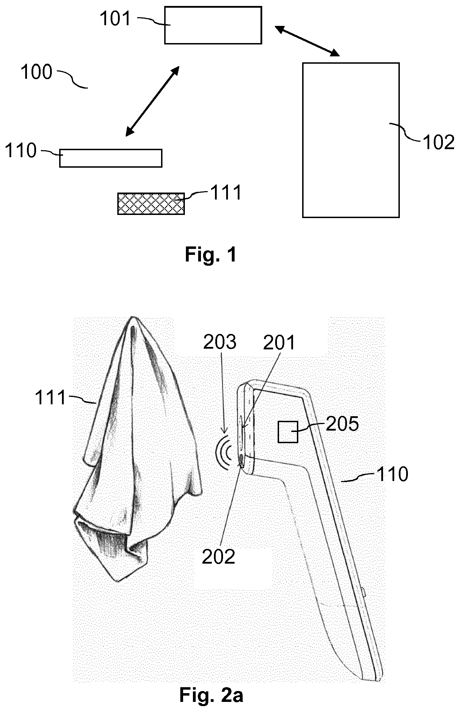

As outlined above, the present document is directed at providing support to a user regarding the use of a household appliance in conjunction with one or more items that are to be processed by and/or placed within the household appliance. In this context, Fig. 1 shows a system 100 for determining property information regarding the properties of one or more items 111. The system 100 comprises a mobile and/or handheld scanning device 110 which may be used by a user to scan an item 111, e.g. a clothing item or a food item. In particular, the scanning device 110 may be configured to determine spectral data regarding an item 111, notably an absorption spectrum and/or a reflection spectrum of an item 111.

The spectral data of an item 111 may be provided to an evaluation unit 101 (e.g. via a wired and/or wireless communication network). The evaluation unit 101 may be configured to determine property information based on the spectral data. In particular, the evaluation unit 101 may be configured to determine information regarding a composition of the item 111. By way of example, the evaluation unit 101 may be configured to determine the one or more textiles (e.g. cotton, wool, a synthetic textile, etc.) comprised within a clothing item. In another example, the evaluation unit 101 may be configured to determine the one or more ingredients comprised within food item.

By way of example, the evaluation unit 101 may comprise or may have access to a database, wherein the database comprises a machine-learned classifier which is configured to determine property information based on the scanned spectral data of an item 111. Alternatively or in addition, the evaluation unit 101, notably the classifier, may be configured to determine an operation mode for a household appliance 102 based on the spectral data. In an example, the evaluation unit 101 is comprised within the scanning device 110.

The evaluation unit 101 may be configured to provide the property information and/or information regarding the determined operation mode to a household appliance 102 (e.g. via a wired and/or wireless communication network). The property information may be used to select an operation mode of the household appliance 102. By way of example, the washing temperature of a washing machine may be selected based on the property information of the one or more clothing items 111 that are to be processed by the washing machine. In another example, the property information may be used to select an appropriate compartment of a refrigerator for storing a food item 111.

Hence, a scanning device 110 may provide support to a user with regards to the operation of a household appliance 102 in conjunction with one or more items 111. The process for scanning an item 111 may consist in placing the item 111 in proximity of the scanning device 110 (e.g. within 5cm, 1cm or less of the scanning device 110). Once the item 111 is correctly placed, a control button of the scanning device 110 may need to be pressed, in order to initiate the scanning process and the determination of the spectral data. The spectral data may then be evaluated (e.g. by an evaluation unit 101), in order to determine property information regarding the scanned item. The property information may be displayed on a display of the scanning device 110.

Prior to performing a scanning process, it may be required to select an item type from a list of possible item types. Example item types are one or more clothing or textile types, one or more food types, etc. The scanning process may then be performed in dependence of the selected item type.

In many cases (e.g. when filling up a washing machine), a user needs to repeat the above mentioned scanning process several times. In such cases, the repeated selection of an item type and/or the repeated initiation of the scanning process may be time consuming and tiring.

Fig. 2a shows a scanning device 110 which comprises a scanning sensor 201, e.g. a Near Infrared (NIR) sensor, which is configured to determine the spectral data for an item 111. For this purpose, the scanning sensor 201 may be configured to emit a measurement signal (e.g. a signal spanning a given spectrum, such as the near infrared spectrum). Furthermore, the scanning sensor 201 may be configured to capture a reflected signal of the measurement signal, wherein the reflected signal has been reflected at the item 111. By comparing the spectrum of the measurement signal with the spectrum of the reflected signal, a reflection spectrum of the item 111 may be determined as spectral data, wherein the reflection spectrum is typically indicative of one or more properties of the item 111 (such as the composition of the item 111).

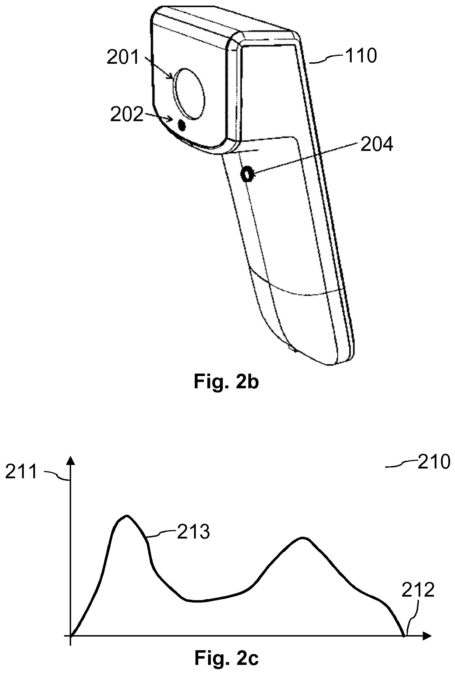

Fig. 2c shows an example reflection spectrum 213 of an item 111 as spectral data 210 for the item 111. The reflection spectrum 213 may indicate the energy 211 of the reflected signal relative to the measurement signal, as a function of wavelength or frequency 212.

The scanning device 110 may further comprise a distance sensor 202 which is configured to determine distance information 203 regarding the distance of a to-be-scanned item 111 from the scanning sensor 201. The distance sensor 202 may be or may comprise a capacitive sensor, an inductive sensor, a photoelectric sensor, an infrared sensor, an ultrasonic sensor, etc. The scanning device 110, notably a control unit 205 of the scanning device 110, may be configured to automatically initiate a scanning process of the scanning and/or spectral sensor 201 in dependence of the distance information 203. In particular, a scanning process may be initiated automatically, if it is determined that the distance between the item 111 and the scanning sensor 201 is at or below a pre-determined distance threshold. By doing this, the need for manually initiating a scanning process may be omitted, thereby rendering the handling of a scanning device 110 more efficient, notably when scanning a relatively high number of items 111.

Fig. 2b provides a perspective view of an example scanning device 110. Furthermore, Fig. 2b shows an optional repeat button 204 of a scanning device 110. The repeat button 204 may be actuated by a user, in order to indicate to the scanning device 110 that several different items 111 are to be scanned. The control unit 205 may be configured to automatically initiate a scanning process in dependence of the distance information 203, only if the repeat button 204 is actuated (e.g. pressed). By doing this, erroneous initiations of scanning processes may be avoided.

The distance sensor 202 may comprise or may be a switch which is actuated (e.g. opened or closed) when a to-be-scanned item 111 touches the distance sensor 202. Hence, the distance information 203 may indicate whether the scanning device 110 touches the item 111 (such that the distance is zero) or not (such that the distance is greater than zero). The distance threshold may be set of zero, such that a scanning process is only initiated automatically, if it is determined that the scanning device 110 touches the to-be-scanned item 111.

Hence, a scanner or scanning device 110 is described, which may be used to scan e.g. clothing items 111 for determining the composition, for performing stain detection and/or for sending washing instructions to a washing machine. Alternatively or in addition, the scanning device 110 may be used to scan food items, medicine and/or drinks. The aspects described in the present document are directed at improving the scan time for scanning a particular item 111, e.g. a clothing or a food item. The scanning time may be shorted by adding a distance and/or proximity sensor 202 to the scanning device 110. The proximity and/or distance sensor 202 may provide distance information 203, which indicates that an item 111 is placed sufficiently closed to the proximity sensor 202, e.g. at a distance of 1-2cm. Upon detecting that an item 111 is placed nearby the scanner 110, the scanner 110 automatically initiates the scan process and scans the item 111.

As outlined above, the process for scanning an item 111 may be relatively tiresome, notably if a relatively high number of items 111 needs to be scanned. By providing a scanning device 110 with a proximity and/or distance sensor 202, the scanning process may be accelerated. In a preferred example, the proximity and/or distance sensor 202 is placed in proximity to the NIR sensor 201 and to a optimal color sensor of the scanning device 110.

The control unit 205 of the scanning device 110 may be configured to capture data regarding the scanning history of the scanning device 110. In particular, the control unit 205 may keep track of the distances that have been used in the past by a user for scanning an item 111. The distance threshold for automatically initiating a scanning process may be determined by the control unit 205 based on the scanning history. By way of example, the scanning distance which a user applied in one or more previous scans may be used as the distance threshold for automatically initiating a scanning process.

The type of item 111 which is to be scanned may be determined based on the first scan of a series of scans that a user performs. In particular, the type of item 111 that a user has entered or specified for a first scan may be reused for the remaining scans of a series of scans.

The scanning device 110 may comprise a user menu which allows a user to switch on/off the functionality of automatic scanning (in addition to or alternative to the provision of a repeat button 204). The menu option and/or the repeat button may enable a user to scan a first item 111 of a particular type and then proceed with automatic scans for the same type for a series of other items 111.

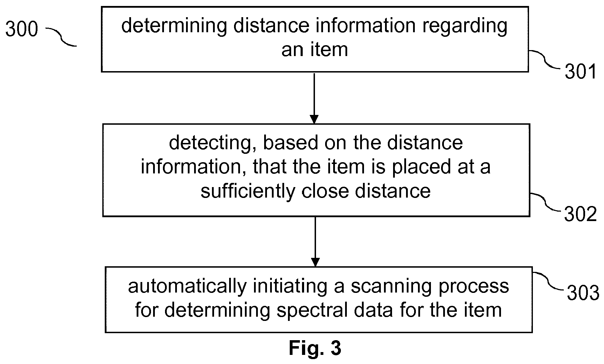

Fig. 3 shows a flow chart of an example method 300 for determining spectral data regarding an item 111 (e.g. a clothing item or a food item) using a scanning device 110. The scanning device 110 may be designed to be held within the hand of a user. In particular, the scanning device 110 may comprise a housing with a portion of the housing forming a handle for holding the scanning device 110.

The scanning device 110 comprises a spectral sensor 201 which is configured to determine spectral data 210 regarding an item 111 which is placed in front of the spectral sensor 201. Furthermore, the scanning device 110 comprises a proximity and/or distance sensor 202 which is configured to determine distance information 203 regarding the distance of the item 111 to the spectral sensor 201. The spectral sensor 201 and the proximity and/or distance sensor 202 may be positioned at or in a portion of the housing of the scanning device 110, which is adjacent to the position forming the handle for holding the scanning device 110.

The method 300 comprises determining 301 distance information 203 using the proximity and/or distance sensor 202. The distance information 203 may indicate the distance between the to-be-scanned item 111 and the spectral sensor 201 and/or the housing of the scanning device 110.

Furthermore, the method 300 comprises determining 302, based on the distance information 203, that the distance of the item 111 is at or below a pre-determined distance threshold. The distance threshold may be a pre-set distance threshold which corresponds e.g. to a distance which is known to provide reliable spectral data 210 using the spectral sensor 201. Alternatively or in addition, the distance threshold may be determined based on the actual usage of the scanning device 110.

In addition, the method 300 comprises, in reaction to determining that the distance of the item 111 is at or below a pre-determined distance threshold, automatically initiating 303 a scanning process of the spectral sensor 201 for determining spectral data 210 regarding the item 111. In particular, the scanning process of the spectral sensor 201 is initiated without the need for any further action of the user of the scanning device 110.

The aspects described in the present document simplify and accelerate the scanning process for determining property information regarding a series of different items 111. Furthermore, the automatic initiation of a scanning process enables a hands-free operation of a scanning device 110. Overall, the comfort and the efficiency of a scanning device 110 are improved.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A handheld scanning device (110) for determining spectral data (210) regarding an item (111), wherein the scanning device (110) comprises
- a spectral sensor (201) configured to determine spectral data (210) regarding an item (111) which is placed in front of the spectral sensor (201);
- a proximity and/or distance sensor (202) configured to determine distance information (203) regarding a distance of the item (111) to the spectral sensor (201); and
- a control unit (205) configured to
- determine, based on the distance information (203), that the distance of the item (111) is at or below a pre-determined distance threshold; and
- in reaction to this, automatically initiate a scanning process of the spectral sensor (201) for determining spectral data (210) regarding the item (111).

2. The scanning device (110) of claim 1, wherein
- the scanning device (110) comprises a user interface (204) which allows a user to indicate that a series of different items (111) is to be scanned; and
- the control unit (205) is configured to
- verify whether the user has indicated via the user interface (204) that a series of different items (111) is to be scanned; and
- automatically initiate the scanning process for the series of different items in dependence of the distance information (203), if the user has indicated via the user interface (204) that a series of different items (111) is to be scanned.

3. The scanning device (110) of claim 2, wherein the user interface (204) comprises
- a button on a housing of the scanning device (110); and/or
- a menu point within a graphical user interface of the scanning device (110), to allow a user to indicate that a series of different items (111) is to be scanned.

4. The scanning device (110) of any previous claims, wherein
- the scanning device (110) comprises a user interface (204) which enables a user to select an item type from a list of different items types;
- the list of different item types notably comprises one or more types of clothing items (111) and/or one or more types of food items (111);
- the spectral sensor (201) is configured to determine the spectral data (210) in dependence of the selected item type; and
- the spectral sensor (201) is notably configured to select a spectral range of a measurement signal for determining the spectral data (210) based on the selected item type.

5. The scanning device (110) of claim 4, wherein the control unit (205) is configured to automatically reuse a selected item type for scanning a series of different items (111).

6. The scanning device (110) of any previous claims, wherein the control unit (205) is configured to determine the distance threshold based on one or more previous scanning processes.

7. The scanning device (110) of claim 6, wherein the control unit (205) is configured to
- determine one or more distance values for a scanning distance that a user has used for one or more manually initiated previous scanning processes; and
- determine the distance threshold based on the one or more distance values.

8. The scanning device (110) of any previous claims, wherein
- the proximity and/or distance sensor (202) comprises a sensor which is triggered by an item (111) touching the sensor, such that the distance information (203) indicates whether the proximity and/or distance sensor (202) touches the item (111) or not;
- the control unit (205) is configured to automatically initiate the scanning process for determining spectral data (210) regarding the item (111), if it is determined based on the distance information that the proximity and/or distance sensor (202) touches the item (111).

9. The scanning device (110) of any previous claims, wherein the control unit (205) is further configured to
- determine property information regarding a property of the item (111) based on the spectral data (210); and/or
- control a household appliance (102) for operation in conjunction with the item (111), based on the spectral data (210).

10. The scanning device (110) of any previous claims, wherein the spectral sensor (201) comprises a near infrared sensor.

11. A method (300) for determining spectral data (210) regarding an item (111) using a scanning device (110); wherein the scanning device (110) comprises a spectral sensor (201) configured to determine spectral data (210) regarding an item (111) which is placed in front of the spectral sensor (201), and a proximity and/or distance sensor (202) configured to determine distance information (203) regarding a distance of the item (111) to the spectral sensor (201); wherein the method (300) comprises
- determining (301) distance information (203) using the proximity and/or distance sensor (202);
- determining (302), based on the distance information (203), that the distance of the item (111) is at or below a pre-determined distance threshold; and
- in reaction to this, automatically initiating (303) a scanning process of the spectral sensor (201) for determining spectral data (210) regarding the item (111).

## Amended claims

### Amended claims in accordance with Rule 137(2) EPC.

1. A handheld scanning device (110) for determining spectral data (210) regarding an item (111), wherein the scanning device (110) comprises
- a user interface (204) which allows a user to indicate that a series of different items (111) is to be scanned;
- a spectral sensor (201) configured to determine spectral data (210) regarding an item (111) of the series which is placed in front of the spectral sensor (201);
- a proximity and/or distance sensor (202) configured to determine distance information (203) regarding a distance of the item (111) to the spectral sensor (201); and
- a control unit (205) configured to
- determine one or more distance values for a scanning distance that a user has used for one or more manually initiated previous scanning processes;
- determine a distance threshold based on the one or more distance values;
- determine, based on the distance information (203), that the distance of the item (111) is at or below the pre-determined distance threshold; and
- in reaction to this, automatically initiate a scanning process of the spectral sensor (201) for determining spectral data (210) regarding the item (111) of the series solely based on the distance information.

2. The scanning device (110) of claim 1, wherein
- the control unit (205) is configured to
- verify whether the user has indicated via the user interface (204) that a series of different items (111) is to be scanned; and
- automatically initiate the scanning process for the series of different items in dependence of the distance information (203), if the user has indicated via the user interface (204) that a series of different items (111) is to be scanned.

3. The scanning device (110) of claim 2, wherein the user interface (204) comprises
- a button on a housing of the scanning device (110); and/or
- a menu point within a graphical user interface of the scanning device (110), to allow a user to indicate that a series of different items (111) is to be scanned.

4. The scanning device (110) of any previous claims, wherein
- the scanning device (110) comprises a user interface (204) which enables a user to select an item type from a list of different items types;
- the list of different item types notably comprises one or more types of clothing items (111) and/or one or more types of food items (111);
- the spectral sensor (201) is configured to determine the spectral data (210) in dependence of the selected item type; and
- the spectral sensor (201) is notably configured to select a spectral range of a measurement signal for determining the spectral data (210) based on the selected item type.

5. The scanning device (110) of claim 4, wherein the control unit (205) is configured to automatically reuse a selected item type for scanning a series of different items (111).

6. The scanning device (110) of any previous claims, wherein
- the proximity and/or distance sensor (202) comprises a sensor which is triggered by an item (111) touching the sensor, such that the distance information (203) indicates whether the proximity and/or distance sensor (202) touches the item (111) or not;
- the control unit (205) is configured to automatically initiate the scanning process for determining spectral data (210) regarding the item (111), if it is determined based on the distance information that the proximity and/or distance sensor (202) touches the item (111).

7. The scanning device (110) of any previous claims, wherein the control unit (205) is further configured to
- determine property information regarding a property of the item (111) based on the spectral data (210); and/or
- control a household appliance (102) for operation in conjunction with the item (111), based on the spectral data (210).

8. The scanning device (110) of any previous claims, wherein the spectral sensor (201) comprises a near infrared sensor.

9. A method (300) for determining spectral data (210) regarding an item (111) using a scanning device (110); wherein the scanning device (110) comprises a spectral sensor (201) configured to determine spectral data (210) regarding an item (111) which is placed in front of the spectral sensor (201), and a proximity and/or distance sensor (202) configured to determine distance information (203) regarding a distance of the item (111) to the spectral sensor (201); wherein the method (300) comprises
- determining one or more distance values for a scanning distance that a user has used for one or more manually initiated previous scanning processes;
- determining a distance threshold based on the one or more distance values;
- indicating that a series of different items (111) is to be scanned via a user interface (204);
- determining (301) distance information (203) using the proximity and/or distance sensor (202);
- determining (302), based on the distance information (203), that the distance of the item (111) of the series is at or below the pre-determined distance threshold; and
- in reaction to this, automatically initiating (303) a scanning process of the spectral sensor (201) for determining spectral data (210) regarding the item (111) of the series solely based on the distance information.
